(19) Europäisches Patentamt
European Patent Office
Office européen des brevets

(11) **EP 3 163 822 B1**

(12) **EUROPEAN PATENT SPECIFICATION**

(45) Date of publication and mention
of the grant of the patent:
**01.08.2018 Bulletin 2018/31**

(51) Int Cl.:
*H04L 25/02* (2006.01)     *H04L 27/26* (2006.01)
*H04L 25/03* (2006.01)     *H04N 21/61* (2011.01)

(21) Application number: **16162793.0**

(22) Date of filing: **30.03.2016**

(54) **METHOD FOR DETECTING CO-CHANNEL INTERFERENCE AND CIRCUIT USING THE SAME**

VERFAHREN ZUR ERKENNUNG VON CO-KANALINTERFERENZ UND SCHALTUNG DAFÜR

PROCÉDÉ DE DÉTECTION D'UNE INTERFÉRENCE ENTRE CANAUX ET CIRCUIT UTILISANT CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2015 CN 201510714239**

(43) Date of publication of application:
**03.05.2017 Bulletin 2017/18**

(73) Proprietor: **ALi Corporation
Hsinchu City 300 (TW)**

(72) Inventor: **YANG, Yong
200233 Shanghai (CN)**

(74) Representative: **Viering, Jentschura & Partner
mbB
Patent- und Rechtsanwälte
Kennedydamm 55 / Roßstrasse
40476 Düsseldorf (DE)**

(56) References cited:
**US-A1- 2008 084 940     US-A1- 2009 185 648
US-A1- 2011 242 428**

• **SCHAFHUBER DIETER ET AL: "MMSE estimation
of time-varying channels for DVB-T systems with
strong co-channel interference", 2006 14TH
EUROPEAN SIGNAL PROCESSING
CONFERENCE, IEEE, 3 September 2002
(2002-09-03), pages 1-4, XP032754151, ISSN:
2219-5491 [retrieved on 2015-03-27]**

**Description**

BACKGROUND OF THE INVENTION

1. Field of the Invention

The instant disclosure relates to the field of orthogonal frequency-division multiplexing (OFDM); in particular, to a method for detecting co-channel interference (CCI) and a circuit using the same.

2. Description of Related Art

The orthogonal frequency-division multiplexing (OFDM) technology is a multicarrier modulation technology, which has been widely used in the wide-band wireless communication field. The main working principle of OFDM is to divide the limited band width into a plurality of sub-channels, and to transmit signals via the parallel sub-channels, wherein the modulation mechanisms of the sub-channels are different, and thus the data amounts carried by the sub-channels are also different. In addition, each subcarrier is orthogonal with each other, and thus the OFDM technology can provide a better frequency spectrum usage efficiency when comparing with the traditional frequency division multiplexing (FDM) technology.

However, the same frequency band is shared by many systems, so it is inevitable to have mutual interferences. Particularly, the co-channel interference (CCI) caused by the PAL, SPECAM or NTSC signals may be severe. For example, after the signal transmitted via the OFDM system is affected by the CCI, signals carried by some subcarriers may be damaged and thus the precision of the channel estimation would decrease and the loss of the signal-to-noise ratio (SNR) would be increased, which heavily decreases the system efficiency. Accordingly, for the receiving end of the common OFDM system, how to effectively detect, estimate and remove the effect of the CCI becomes an important thing to increase the system efficiency.

US2008/0084940 discloses an OFDM receiver including a co-channel interference CCI detector implemented in the frequency-domain.

For a common OFDM system, the CCI detection is usually implemented in the frequency domain, but this can only be implemented with some known parameters. However, the CCI may severely affect the parameter estimation in the time domain, so the CCI detection implemented purely in the frequency domain can barely work for the receiving end of the OFDM system.

According to a solution of the prior art and disclosed in US 2008/0084940 A1, "OFDM receiver", an OFDM receiver provided includes a CCI detector and a frequency-domain notch filter. The CCI detector detects whether or not the co-channel interference exists in a sub-carrier and lowers the weight of a distorted sub-carrier to eliminate the influence of the co-channel interference.

SUMMARY OF THE INVENTION

The problem of the invention is solved by the subject matter of the independent claims. Advantageous embodiments are disclosed by the dependent claims.

The instant disclosure provides a method for detecting co-channel interference. The method for detecting co-channel interference is used in a receiving device in an OFDM system, and the receiving device receives an OFDM signal having a plurality of symbols and executes a channel estimating operation for the OFDM signal. The method for detecting co-channel interference comprises: respectively capturing a plurality of time-domain interpolation results related to each symbol, after executing a scattered pilot time-domain interpolation during the channel estimating operation; respectively executing a differential operation and a block average operation for the time-domain interpolation results of each symbol, to generate a first error sequence related to each symbol and to correspondingly obtain an average of all elements in the first error sequence as an error average of each symbol; sequentially executing a sliding average operation for the first error sequence of each symbol based on a moving index of a sliding window, to obtain a first vector related to each symbol and to correspondingly obtain the maximum among all elements in the first vector as an abnormal output related to each symbol; and determining whether the OFDM signal is affected by the co-channel interference based on the abnormal output and the error average of each symbol.

The instant disclosure further provides a circuit for detecting co-channel interference, and the circuit for detecting co-channel interference is a circuit for detecting co-channel interference. The receiving device receives an OFDM signal having a plurality of symbols and executes a channel estimating operation for the OFDM signal. The circuit for detecting co-channel interference comprises a capturing module, a first operation processing module, a second operation processing module and a determining module. The capturing module is configured to respectively capture a plurality of time-domain interpolation results related to each symbol, after executing a scattered pilot time-domain interpolation during the channel estimating operation. The first operation processing module is configured to respectively execute a differential operation and a block average operation for the time-domain interpolation results of each symbol, to generate a first error sequence related to each symbol and to correspondingly obtain an average of all elements in the first error sequence as an error average of each symbol. The second operation processing module is configured to sequentially execute a sliding average operation for the first error sequence of each symbol based on a moving index of a sliding window, to obtain a first vector related to each symbol and to correspondingly obtain the maximum among all elements in the first vector as an abnormal output related to each symbol. The determining module is configured to determine whether the OFDM signal is affected by the co-channel interference based on the abnormal output and the error average of each symbol.

To sum up, in the method and circuit for detecting co-channel interference provided by the instant disclosure, the co-channel interference detection is implemented by using the time-domain interpolation results, and thus the detection efficiency can be raised. In addition, both of the non-data symbol and data symbol are taken into consideration, so the detection result can be much more precise. Moreover, the differences between the thresholds of intervals can be overcome by using the sliding window to implement the detection. As a result, via the method and circuit for detecting co-channel interference provided by the instant disclosure, both of the static interference and the dynamic interference can be detected, which thus helps to improve the overall system efficiency.

For further understanding of the instant disclosure, reference is made to the following detailed description illustrating the embodiments and embodiments of the instant disclosure. The description is only for illustrating the instant disclosure, not for limiting the scope of the claim.

BRIEF DESCRIPTION OF THE DRAWINGS

Embodiments are illustrated by way of example and not by way of limitation in the figures of the accompanying drawings, in which like references indicate similar elements and in which:

Fig. 1 shows a flow chart of a method for detecting co-channel interference of one embodiment of the instant disclosure.

Fig. 2 shows a schematic diagram of the frame structure of OFDM signals in a DVB-T2 system of one embodiment of the instant disclosure.

Fig. 3 shows a flow chart of determining whether the OFDM signal is affected by the co-channel interference based on the abnormal output and the error average of each symbol in a method for detecting co-channel interference of one embodiment of the instant disclosure.

Fig. 4 shows a flow chart of executing a first comparing operation based on the abnormal output and the error average of each symbol in a method for detecting co-channel interference of one embodiment of the instant disclosure.

Fig. 5 shows a block diagram of a circuit for detecting co-channel interference of one embodiment of the instant disclosure.

Fig. 6 shows a schematic diagram of a circuit structure for the determining module to operate in a circuit for detecting co-channel interference of one embodiment of the instant disclosure.

DETAILED DESCRIPTION OF PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings.

The method and circuit for detecting co-channel interference provided by the instant disclosure can be applied in any receiving device of an OFDM system. For example, the OFDM system can be an Integrated Services Digital Broadcasting system (ISDB-T system), a Digital Video Broadcasting-Terrestrial system (DVB-T system), Digital Video Broadcasting-Second Generation Terrestrial (DVB-T2 system) or the like; however, it is not limited herein. In short, the receiving device of the OFDM system receives an OFDM signal having lots of symbols and executes channel estimation for this OFDM signal.

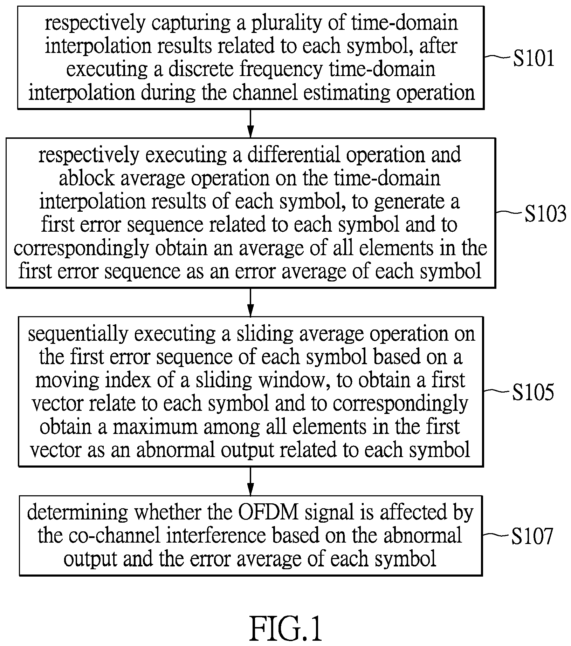

Please refer to Fig. 1. Fig. 1 shows a flow chart of a method for detecting co-channel interference of one embodiment of the instant disclosure. In Step S101, a plurality of time-domain interpolation results related to each symbol are respectively captured after executing a scattered pilot time-domain interpolation during the channel estimating operation. After that, in Step S103, a differential operation and a block average operation are respectively executed on the time-domain interpolation results of each symbol, to generate a first error sequence of each symbol and to correspondingly obtain an average of all elements in the first error sequence as an error average of each symbol. In Step S105, sequentially executing a sliding average operation on the first error sequence of each symbol based on a moving index of a sliding window, to obtain a first vector related to each symbol and to correspondingly obtain the maximum among all elements in the first vector as an abnormal output of each symbol. Finally, in Step S107, determining whether the OFDM signal is affected by the co-channel interference based on the abnormal output and the error average of each symbol.

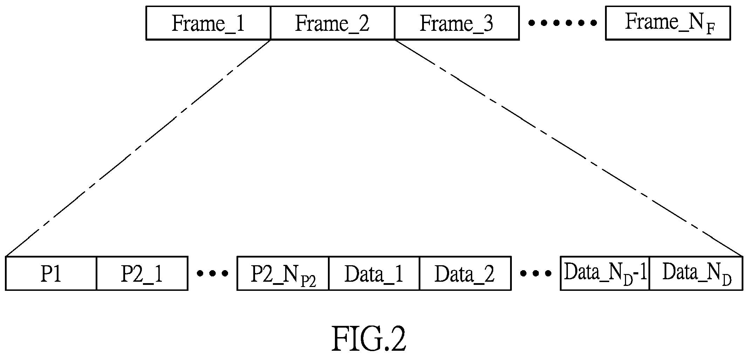

For the convenience of illustration, in the following description, a receiving device of the DVB-T2 system is taken for example to describe the method for detecting co-channel interference; however, it is not limited herein. Please refer to Fig. 2. Fig. 2 shows a schematic diagram of the frame structure of OFDM signals in a DVB-T2 system of one embodiment of the instant disclosure. According to the industrial standards, each frame of an OFDM signal in the DVB-T2 system comprises a P1 symbol, one or more than one P2 symbol and a plurality of data symbols, wherein the P1 symbol has 2048 carriers, which is labeled at the header of the frame for synchronous detection. The P2 symbol comprises the data of the first layer (L1), and the data of the first layer (L1) mainly provides the necessary parameters for the decoding device to decode each data symbol, such as pilot patterns, ratio of guard interval, modulations, symbol rates or the like. The plurality of data symbols is what actually carries the actual payload data.

From the above description, those skilled in the art should understand that the method for detecting co-channel interference is implemented after the synchronous detection of the P1 symbol is completed. Thus, the OFDM signals received by the receiving device in this embodiment are the OFDM signals obtained after synchronous detection is done. In is worth mentioning that, the way to implement the synchronous detection of the P1 symbol is not restricted herein. In other words, the plurality of symbols of the OFDM signal received by the receiving device in this embodiment may comprise at least one P2 symbol and a plurality of data symbols shown in Fig. 2. It is worth mentioning that, there may not be non-data symbols, such as the P1 symbol or the P2 symbol, but only data symbols used in other OFDM systems. Thus, the data symbols of the OFDM signal received by the receiving device of this type of system can be simply viewed as the data symbols obtained after their synchronous detection is done.

On the other hand, the channel estimating operation executed by the receiving device in this embodiment is a well-known skill in common OFDM systems. For example, for an OFDM signal received after synchronous detection, the receiving device would obtain each scattered subcarrier and sequentially implement the time interpolation and the frequency interpolation for the obtained subcarriers to get the channel response related to this OFDM system.

From the above description, those skilled in the art should understand that, one of achievements of the instant disclosure is to implement the CCI detection directly according to the time-domain interpolation results of the pilot subcarriers, which can effectively overcome the effects resulted from the CCI and improve the efficiency of CCI detection. In addition, the working principle of the above channel estimating operation should be known by those skilled in the art, and thus the redundant information is not repeated.

Additionally, the differential operation used in Step S103 can be the backward difference or the forward difference that are common in this field; however, it is not limited herein and the redundant information regarding to the differential operation is not repeated. The block average operation in Step S103 is to execute an average operation on the time-domain interpolation result of each symbol after executing the differential operation, wherein every R time-domain interpolation results of a symbol are sequentially and non-repeatedly grouped to be averaged, and to input the every average result to the first error sequence. R is a positive integer variable and may be varied according to the type of symbols.

Specifically speaking, as mentioned above, the symbols of the OFDM signal received by the receiving device in this embodiment may comprise P2 symbols and data symbols; in other words, both non-data symbols and data symbols. In addition, those skilled in the art should know that, the amount of pilot subcarriers of the non-data symbol is much more than the amount of pilot subcarriers of the data symbol. In other words, for each symbol in Step S101, the amount of the captured time-domain interpolation results of the symbols could be different. Thus, in Step S103, the number R used to divide the time-domain interpolation results into multiple groups for average operation may be different in accordance with types of symbol.

For example, assuming that the time-domain interpolation results captured in Step S101 are 4,640 non-data symbols, and in Step S103, every 8 of the 4,640 time-domain interpolation results are sequentially and non-overlapped grouped together (i.e. R may be 8) to be averaged. After that, the result of each average operation is input to the first error sequence, to generate the first error sequence related to the non-data symbol, which has 580 elements (4,640/8=580).

Moreover, assuming that the captured time-domain interpolation results are 1,160 data symbol, and in Step S103, every 2 of the 1,160 time-domain interpolation results are sequentially and non-overlapped grouped together (i.e. R may be 2) to be averaged. After that, the result of each average operation is input to the first error sequence, to generate the first error sequence related to the data symbol, which also has 580 elements (1,160/2=580). The above embodiments are for illustrating but not for limiting the instant disclosure.

On the other hand, in Step S103, the equation for obtaining the average of all elements in the first error sequence can be represented as the equation (1):

$$S\_AVG = (1/K)\sum\nolimits_{i=1}^{K} ERR(i)$$

$S\_AVG$ is the average (that is, the error average), $K$ is the total amount of elements of the first error sequence (in the above example, $K$ is 580), and $ERR(i)$ is the $i$th element of the first error sequence.

Moreover, as shown in Fig. 2, there would not be overlapped between each symbol in the distribution of the time domain. Thus, the receiving device can sequentially execute a first error sequence for the first error sequence generated by each symbol, to obtain the first vector related to each symbol. Accordingly in Step S105, the equation for obtaining all elements of the first vector by executing a sliding average operation for the first error sequence of each symbol can be represented as the equation (2):

$$MAVG(i) = (1/M)\sum\nolimits_{r=1}^{M} ERR(i - M + r)$$

$M$ is a window length related to the sliding window, $i$ is a moving index and $ERR(i - M + r)$ is the value of the $(i - M + r)$th element in the first error sequence. It is worth mentioning that, the equation (2) is just one example of the sliding average operation, not the limitation to the instant disclosure. In addition, the receiving device would correspondingly find the maximum among all elements in the first vector as an abnormal output related to each symbol. It is worth mentioning that, those skilled in the art should understand that, the window length may be a dynamic variable that is changeable according to the setting of the receiving device of the OFDM system. Finally, please again refer to Fig. 1, the receiving device can determine whether the OFDM signal is affected by the co-channel interference based on the abnormal output and the error average of each symbol.

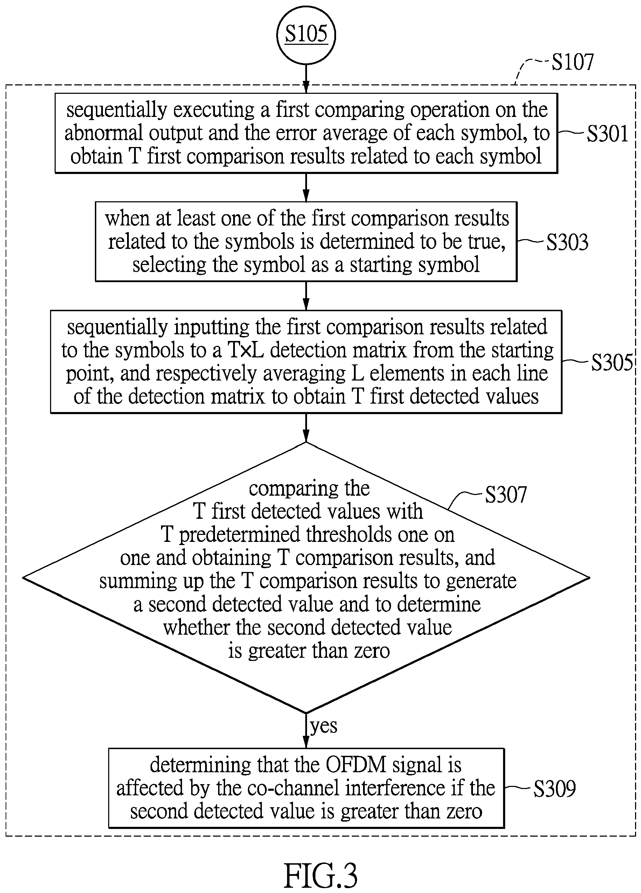

In order to further illustrate the details of Step S107, please refer to Fig. 3. Fig. 3 shows a flow chart of determining whether the OFDM signal is affected by the co-channel interference based on the abnormal output and the error average of each symbol in a method for detecting co-channel interference of one embodiment of the instant disclosure. In Fig. 1 and Fig. 3, similar reference numbers or symbols refer to the same steps, and the redundant information is not repeated.

In conjunction with Fig. 1 and Fig. 3, Step S107 further comprises Steps S301-S309. In Step S301, the receiving device sequentially executes a first comparing operation on the abnormal output and the error average of each symbol, to obtain T first comparison results related to each symbol, wherein T is a positive integer greater than 1. In Step S303, when at least one of the first comparison results of a symbol is determined to be true, the symbol would be chosen as a starting symbol. In Step S305, the first comparison results of the starting symbol and the following symbols are sequentially input to a T rows × L columns detection matrix. After that, the receiving device respectively executes the average operation for L elements in each row of the detection matrix to obtain T first detected values, wherein L is a positive integer.

In addition, in Step S307, T first detected values are compared with T predetermined thresholds one on one, and T comparison results thereof are obtained. After that, an addition operation is executed on the T comparison results to generate a second detected value, and whether the second detected value is greater than zero is further determined. Finally, in Step S309, it is determined that the OFDM signal is affected by the co-channel interference if the second detected value is greater than zero. On the contrary, the OFDM signal would be determined unaffected by the CCI if the second detected value is not greater than zero.

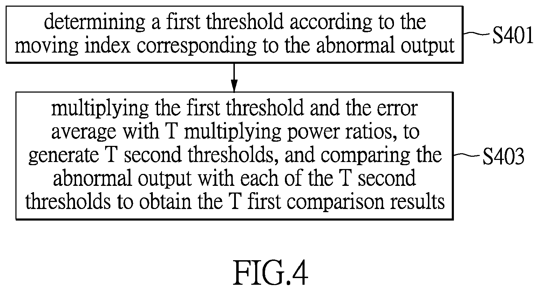

On the other hand, in order to further illustrate the details of the first comparing operation executed on the abnormal output and the error average of each symbol in Step S301, please refer to Fig. 4. Fig. 4 shows a flow chart of executing a first comparing operation based on the abnormal output and the error average of each symbol in a method for detecting co-channel interference of one embodiment of the instant disclosure.

In Step S401, a first threshold is determined according to the moving index corresponding to the abnormal output. In Step S403, the first threshold and the error average are multiplied with T multiplying power ratios, to generate T second thresholds. After that, the abnormal output is compared with each of the T second thresholds to obtain corresponding T first comparison results, wherein when the abnormal output is greater than the compared second threshold, the first comparison result thereof is determined to be true.

Specifically, signal hopping occurs on the subcarriers affected by the co-channel interference, therefore in prior arts, CCI detection methods are mostly implemented by comparing the difference between adjacent subcarriers with a threshold $\alpha$. However, since different sections of each symbol may be affected by different edge effects, it would be hard to determine a proper threshold $\alpha$.

Accordingly, one of achievements of the Step S401 of the instant disclosure is that, by finding the moving index corresponding to the maximum difference of each symbol (that is, the moving index corresponding to the abnormal output of each symbol), the section where the maximum difference is can be found. After that, the first threshold related to this section can thus be determined. It is worth mentioning that, the way to obtain the first threshold is not limited herein. For example, the receiving device may establish a look-up table according to the relationship between the moving index and the threshold in advance, and stores the look-up table in the built-in memory. This look-up table is provided to implement the above Step S401 for determining the first threshold related to the moving index. Briefly, using the look-up table is just an example but not a limitation to the instant disclosure. In Step S403, the equation to generate T second thresholds may be simplified and represented as the equation (3):

$$TH\_2(j) = R\_TH \times S\_AVG \times \omega(j)$$

$TH\_2(j)$ is the $j^{th}$ second threshold, $j$ is any number from 1 to T, $R\_TH$ is the first threshold, and $\omega(j)$ is the $j^{th}$ power ratio of the T power ratios. In other words, one of achievements of Step S403 of the instant disclosure is that, a plurality of second thresholds with different values can be obtained based on the first threshold and different multiplying power ratios. Thus, comparing with the prior art that only uses one threshold $\alpha$, in the instant disclosure the detection efficiency of the CCI can be increased by using a plurality of thresholds.

For example, assuming that the receiving device totally generates 32 thresholds resulted from the first thresholds multiplying with different multiplying powers. In other words, the second thresholds includes $TH\_2(1) \sim TH\_2(32)$. When the abnormal output of certain symbol is greater than its corresponding second threshold $TH\_2(j)$ (that is, $j$ is one of 1 to 32), the receiving device outputs a first comparison result which is determined to be true. Likewise, based on this symbol it can be determined whether the OFDM signal is affected by the CCI.

Precisely, each symbol is differently positioned in the OFDM signal and is affected by different edge effects, so it may result in misjudgments. To avoid these misjudgments, in this disclosure, the first comparison results of a plurality of symbols would be collected and averaged, and the averaged first comparison result is compared with other predetermined thresholds, so as to determine whether the OFDM signal is affected by the CCI. This is helpful to increase the efficiency and accuracy of CCI detection.

For example, in Step S303, when at least one of T first comparison results of certain symbol is true, the receiving device can choose this symbol as a starting symbol. After that, in Step S305, from the starting symbol, the receiving device sequentially inputs T first comparison results obtained via executing Steps S401~S403 for the following symbols to the T×L detection matrix. It is worth mentioning that, according to the above, those skilled in the art should be able to understand that, the parameter L represents for the amount of symbols collected for detection, and L is variable based on the setting of the receiving device.

Assuming that L is 20 and T is 32, the receiving device may generate a 32 columns ×20 rows detection matrix in Step S305. After that, the receiving device respectively executes an average operation for 20 elements in each column of the detection matrix to obtain 32 first detected values. In Step S403, the first comparison result would be only generated as true "1" or false "0", so the elements in the detection matrix would be either 0 or 1. In other words, the 32 first detected values generated in Step S305 would all be real numbers between 0 (that is, 0/20) and 1 (that is, 20/20).

In Step S307, the receiving device compares the 32 first detected values that are between 0 and 1 with a plurality of predetermined thresholds and obtains a plurality of comparing results. After that, the receiving device executes an addition operation for all of the comparing results to generate a second detected value. In this way, the misjudgments can be avoided and the reliability of detection can be raised. In Step S309, as long as the second detected value is greater than zero, the receiving device may efficiently determine that the OFDM signal is affected by the CCI. According to the above instant disclosure, even if the CCI is small, it can still be effectively detected. Herein, the parameters L and T, the threshold, the multiplying power ratio are not limited, and those skilled in the art should be able to design the above based on need.

In practice, values of the second thresholds can be arranged in ascending order or descending order. When the second thresholds are arranged in ascending order, the predetermined thresholds are arranged in descending order, and when the second thresholds are arranged in descending order, the predetermined thresholds are arranged in ascending order. For example, assuming that the T predetermined thresholds are $DET\_TH(1) \sim DET\_TH(T)$, and the T second thresholds $TH\_2(1) \sim TH\_2(T)$ are arranged in ascending order (that is, $TH\_2(1) < TH\_2(2) < TH\_2(3) < ...... < TH\_2(T)$), the T predetermined thresholds would be arranged in descending order (that is, $DET\_TH(1) > DET\_TH(2) > DET\_TH(3) > ...... > DET\_TH(1)$). In this way, it can prevent other minor interferences from being judged as the CCI.

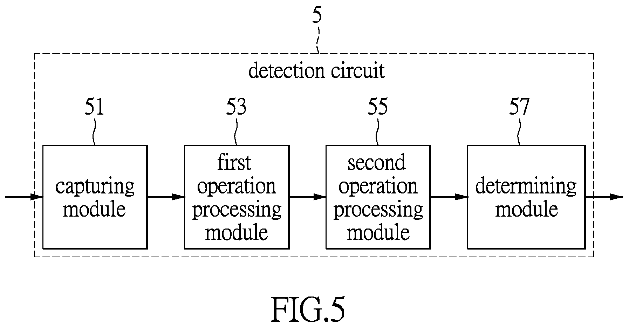

In order to further illustrate the operation flow of the method for detecting the CCI, please refer to Fig. 5. Fig. 5 shows a block diagram of a circuit for detecting co-channel interference of one embodiment of the instant disclosure. However, the embodiment shown in Fig. 5 is simply for illustration but not as a limitation to the instant disclosure.

The detection circuit 5 may be applied in the decoding device in any kind of OFDM system, and the receiving device of the OFDM system is configured to receive an OFDM signal having a plurality of symbols and to execute a channel estimating operation for the OFDM signal. The detection circuit 5 comprises a capturing module 51, a first operation processing module 53, a second operation processing module 55 and a determining module 57. The above element may be implemented via hardware circuits or the combinations of hardware circuits, firmware circuits, and software circuits, which is not limited herein. In addition, the capturing module 51, the first operation processing module 53, the second operation processing module 55 and the determining module 57 may be configured to be integrated or separated, and it is also not limited herein.

As mentioned above, the method for detecting co-channel interference is implemented after the synchronous detection of the PI symbol is completed. Thus, the OFDM signals received by the receiving device in this embodiment are the OFDM signals obtained after their synchronous detection is done.

The capturing module 51 is configured to respectively capture a plurality of time-domain interpolation results related to each symbol, after executing a scattered pilot time-domain interpolation during the channel estimating operation. The first operation processing module 53 is configured to respectively execute a differential operation and a block average operation for the time-domain interpolation results of each symbol so as to generate a first error sequence related to each symbol, and to correspondingly obtain an average of all elements in the first error sequence as an error average of each symbol. The second operation processing module 55 is configured to sequentially execute a sliding average operation for the first error sequence of each symbol based on a moving index of a sliding window so as to obtain a first vector related to each symbol, and to correspondingly obtain a maximum among all elements in the first vector as an abnormal output related to each symbol. The determining module 57 is configured to determine whether the OFDM signal is affected by the co-channel interference based on the abnormal output and the error average of each symbol.

In detail, the OFDM system may be a DVB-T2 system, and the plurality of symbols may include the P2 symbol and the data symbols shown in Fig. 2 (that is, the non-data symbol and the data symbol); however, it is not limited herein.

In addition, the detection circuit 5 may be used to implement the method for detecting co-channel interference as shown in Fig. 1, and thus Fig. 1 may also be referred for further understanding.

As mentioned above, the block average operation executed by the first operation processing module 53 is to average every R time-domain interpolation results of each symbol, sequentially and non-overlapped, after executing the differential operation, and to input the result of each average operation to the first error sequence. R is a positive integer variable and varied according to the type of each symbol, such as the data symbol or the non-data symbol. In addition, the average of all elements in the first error sequence obtained by the first operation processing module 53 can be represented as the above-mentioned equation (1), and all elements of the first vector by the second operation processing module 55 executing a sliding average operation for the first error sequence of each symbol can be represented as the above-mentioned equation (2).

On the other hand, the determining module 57 may implement the operation flows shown in Figs. 3 and 4, and thus please refer to Figs. 3 and 4 for understanding.

Specifically, comparing with the prior arts that uses only one threshold $\alpha$, the determining module 57 in this embodiment would firstly find the moving index corresponding to the maximum difference of each symbol (that is, the abnormal output of each symbol), and based on the found moving index the section where the maximum difference is may be found. After that, the determining module 57 may thus determine the first threshold related to this section. In addition, in this disclosure, the first comparison results of a plurality of symbols would be collected and averaged, and the averaged first comparison result is compared with other predetermined thresholds, so as to determine whether the OFDM signal is affected by the CCI. Thereby, even if the CCI is small, it can be effectively detected via the instant disclosure, and thus misjudgments may be reduced.

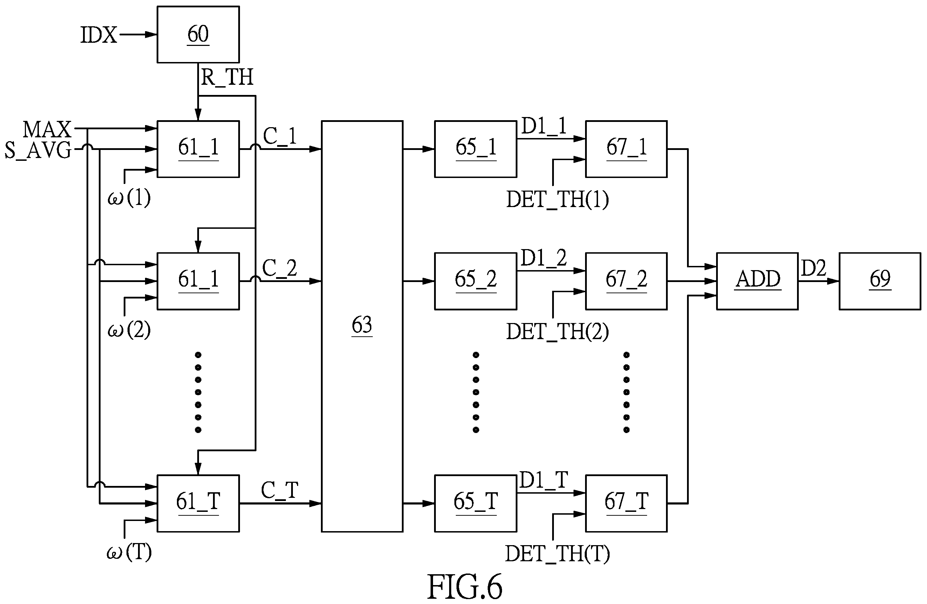

Moreover, another embodiment shown in Fig. 6 is for illustrating the circuit structures for the determining module to execute the methods shown in Figs. 3 and 4. Fig. 6 shows a schematic diagram of a circuit structure of the determining module in a CCI detection circuit of one embodiment of the instant disclosure. However, the following description is only one of the embodiments of the above method and the determining module, but is not to limit the instant disclosure. Besides, the details of the method have been described in the above embodiments, and thus please refer to Figs. 3-5 for details.

When the determining module determines whether the OFDM signal is affected by the CCI based on the abnormal output MAX and the error average S_AVG of a symbol, the determining module would firstly determine a first threshold R_TH corresponding to the moving index IDX, which is corresponding to the abnormal output MAX of this symbol, via the look-up table 60.

The T first-stage comparison circuits 61_1~61_T configured to implement Step S403 shown in Fig. 4, so as to obtain T first comparison results C_1~C_T, wherein the $\omega(1)\sim\omega(T)$ is the T multiplying power ratios in the above equation (3). If at least one of these first comparison results C_1~C_T of this symbol is true, the determining module takes this symbol as a starting symbol, and starts to collect the T first comparison results C_1~C_T of the starting symbol and the following symbols via the T×L detection matrix 63. Moreover, T block average operation circuits 65_1~65_T shown in Fig. 6 are configured to respectively execute an average operation for the L elements in each line of the detection matrix 65, so as to obtain the T first detected values D1_1~D1_T. The T second-stage comparison circuits 67_1~67_T shown in Fig. 6 are configured to compare the T first detected values D1_1~D1_T with the T predetermined threshold *DET_TH*(1)~*DET_TH*(*T*) one on one, and T comparison results thereof are obtained. After that, an addition operation via the adder ADD is executed on the T comparison results to generate a second detected value D2. Finally, the determining unit 69 determines whether the second detected value D2 is greater than zero, and determines that the OFDM signal is affected by the co-channel interference as the second detected value D2 is greater than zero.

To sum up, in the method and circuit for detecting co-channel interference provided by the instant disclosure, the co-channel interference detection is implemented by using the time-domain interpolation results, and thus the detection efficiency can be improved. In addition, both of the non-data symbol and data symbol are taken into consideration, so the detection result would be much more accurate. Moreover, the differences between the thresholds of different sections can be overcome by dynamically detecting via the sliding window to implement the detection. As a result, via the method and circuit for detecting co-channel interference provided by the instant disclosure, both of the static interference and the dynamic interference can be detected, which thus helps to improve the overall system efficiency.

The descriptions illustrated *supra* set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

**Claims**

1.  A method for detecting co-channel interference in a receiving device in an OFDM system, the receiving device receiving an OFDM signal having a plurality of symbols and conducting a channel estimating operation on the OFDM signal, **characterized in that** the method comprises steps of:

    respectively capturing a plurality of time-domain interpolation results related to each of the symbols, after executing a scattered pilot time-domain interpolation during the channel estimating operation (S101);
    respectively executing a differential operation and a block average operation on the time-domain interpolation results of each symbol, to generate a first error sequence related to each symbol and to correspondingly obtain an average of all elements in the first error sequence as an error average of each symbol (S103);
    sequentially executing a sliding average operation on the first error sequence of each symbol based on a moving index of a sliding window, to obtain a first vector related to each symbol and to correspondingly obtain a maximum among all elements in the first vector as an abnormal output related to each symbol (S105); and
    determining whether the OFDM signal is affected by the co-channel interference based on the abnormal output and the error average of each symbol (S107);
    wherein the $i^{th}$ element of the first vector is *MAVG*(*i*), wherein

    $$MAVG(i) = (1/M)\sum_{r=1}^{M} ERR(i - M + r) \,,$$ *M* is a window length related to the sliding window, *i* is the moving index and *ERR*(*i* - *M* + *r*) is the value of the (*i* - *M* + *r*)$^{th}$ element in the first error sequence, r is a positive integer variable changeable from 1 to M, wherein *M* is a dynamic variable and varied according to the setting of the receiving device;
    wherein the block average operation includes sequentially and non-overlapped averaging every R time-domain interpolation results of each symbol after executing the differential operation, and sequentially inputting each average result to the first error sequence, wherein R is a positive integer variable and varied according to the type of each symbol;
    wherein step of determining whether the OFDM signal is affected by the co-channel interference based on the abnormal output and the error average of each symbol (S107), further includes:

    sequentially executing a first comparing operation on the abnormal output and the error average of each symbol, to obtain T first comparison results related to each symbol (S301), wherein T is a positive integer greater than 1;
    when at least one of the first comparison results related to the symbols is determined to be true, selecting the symbol as a starting symbol (S303);
    sequentially inputting the first comparison results related to the symbols to a detection matrix from the starting symbol, and respectively averaging L elements in each line of the detection matrix to obtain T first detected values (S305), wherein L is a positive integer;
    comparing the T first detected values with T predetermined thresholds one on one and obtaining T comparison results, and summing up the T comparison results to generate a second detected value and to determine whether the second detected value is greater than zero (S307); and
determining that the OFDM signal is affected by the co-channel interference if the second detected value is greater than zero (S309).

2. The method according to claim 1, wherein the average of all elements in the first error sequence is *S_AVG*, wherein

$$S\_AVG = (1/K)\sum_{i=1}^{K} ERR(i)$$

and *K* is an amount of elements of the first error sequence, and *ERR(i)* is the value of the *i*th element in the first error sequence.

3. The method according to claim 1, wherein the first comparing operation comprises:

determining a first threshold according to the moving index corresponding to the abnormal output (S401); and
multiplying the first threshold and the error average with T multiplying power ratios, to generate T second thresholds, and comparing the abnormal output with each of the T second thresholds to obtain the T first comparison results (S403);
wherein when the abnormal output is greater than the second threshold, the first comparison result is determined to be true.

4. The method according to claim 3, wherein when values of the T second thresholds are ascending, values of the T predetermined thresholds are descending, and when the values of the T second thresholds are descending, the values of the T predetermined thresholds are ascending.

5. A circuit (5) for detecting co-channel interference, used in a receiving device in an OFDM system, wherein the receiving device receives an OFDM signal having a plurality of symbols and executing a channel estimating operation on the OFDM signal, **characterized in that** the circuit (5) comprises:

a capturing module (51), configured to respectively capture a plurality of time-domain interpolation results related to each symbol, after executing a scattered pilot time-domain interpolation during the channel estimating operation;
a first operation processing module (53), configured to respectively execute a differential operation and a block average operation on the time-domain interpolation results of each symbol, to generate a first error sequence related to each symbol and to correspondingly obtain an average of all elements in the first error sequence as an error average of each symbol;
a second operation processing module (55), configured to sequentially execute a sliding average operation on the first error sequence of each symbol based on a moving index of a sliding window, to obtain a first vector related to each symbol and to correspondingly obtain a maximum among all elements in the first vector as an abnormal output related to each symbol; and
a determining module (57), configured to determine whether the OFDM signal is affected by the co-channel interference based on the abnormal output and the error average of each symbol;
wherein the *i*th element of the first vector is *MAVG(i)*, wherein

$$MAVG(i) = (1/M)\sum_{r=1}^{M} ERR(i - M + r),$$

*M* is a window length related to the sliding window, *i* is the moving index and *ERR(i - M + r)* is the value of the *(i - M + r)*th element in the first error sequence, r is a positive integer variable changeable from 1 to M, wherein *M* is a dynamic variable and varied according to the setting of the receiving device;
wherein the first operation processing module (53) is further configured to sequentially and non-overlapped average every R time-domain interpolation results of each symbol after executing the differential operation, and configured to sequentially input each average result to the first error sequence, wherein R is a positive integer variable and varied according to the type of each symbol; and
wherein to determine whether the OFDM signal is affected by the co-channel interference the determining module (57) is further configured to:

sequentially execute a first comparing operation on the abnormal output and the error average of each symbol, to obtain T first comparison results related to each symbol, wherein T is a positive integer greater than 1;

when at least one of the first comparison results related to the symbols is determined to be true, select the symbol as a starting symbol;

sequentially input the first comparison results related to the symbols to a detection matrix from the starting symbol, and respectively average L elements in each line of the detection matrix to obtain T first detected values, wherein L is a positive integer;

compare the T first detected values with T predetermined thresholds one on one and obtain T comparison results, and sum up the T comparison results to generate a second detected value and to determine whether the second detected value is greater than zero; and

determine that the OFDM signal is affected by the co-channel interference if the second detected value is greater than zero.

6.  The circuit according to claim 5, wherein the average of all elements in the first error sequence is *S_AVG,* wherein

$$S\_AVG = (1/K)\sum_{i=1}^{K} ERR(i)$$ and *K* is an amount of elements of the first error sequence, and *ERR*(*i*) is the value of the *i*[th] element in the first error sequence.

7.  The circuit according to claim 5, wherein to execute the first comparing operation the determining module (57) is further configured to:

determine a first threshold according to the moving index corresponding to the abnormal output; and

multiply the first threshold and the error average with T multiplying power ratios, to generate T second thresholds, and compare the abnormal output with each of the T second thresholds to obtain the T first comparison results; wherein when the abnormal output is greater than the second threshold, the first comparison result is determined to be true.

8.  The circuit according to claim 7, wherein values of the T second thresholds are ascending, values of the T predetermined thresholds are descending, and when the values of the T second thresholds are descending, the values of the T predetermined thresholds are ascending.

**Patentansprüche**

1.  Verfahren zum Detektieren einer Gleichkanalinterferenz in einer Empfangsvorrichtung in einem OFDM-System, wobei die Empfangsvorrichtung ein OFDM-Signal mit einer Vielzahl von Symbolen empfängt und eine Kanalschätzoperation des OFDM-Signals durchführt, **dadurch gekennzeichnet, dass** das Verfahren die folgenden Schritte umfasst:

jeweiliges Erfassen einer Vielzahl von Zeitbereichsinterpolationsergebnissen, die mit jedem der Symbole in Beziehung stehen, nach Ausführen einer gestreuten Pilotzeitbereichsinterpolation während der Kanalschätzoperation (S101);

jeweiliges Ausführen einer differentiellen Operation und einer Blockmittelwertoperation der Zeitbereichsinterpolationsergebnisse jedes Symbols, um eine erste Fehlersequenz zu erzeugen, die sich auf jedes Symbol bezieht, und um entsprechend einen Mittelwert aller Elemente in der ersten Fehlersequenz als einen Fehlermittelwert jedes Symbols zu erhalten (S103);

sequentielles Ausführen einer gleitenden Mittelwertoperation an der ersten Fehlersequenz jedes Symbols basierend auf einem Gleitindex eines Gleitfensters, um einen ersten Vektor zu erhalten, der sich auf jedes Symbol bezieht und um entsprechend ein Maximum unter allen Elementen in dem ersten Vektor als eine anormale Ausgabe bezogen auf jedes Symbol (S105) zu erhalten; und

Bestimmen, ob das OFDM-Signal durch die Gleichkanalinterferenz auf der Grundlage der anomalen Ausgabe und des Fehlermittelwerts jedes Symbols beeinflusst wird (S107);

wobei das i-te Element des ersten Vektors *MAVG*(*i*) ist, wobei $$MAVG(i) = (1/M)\sum_{r=1}^{M} ERR(i - M + r)$$ ist, M eine Fensterlänge bezogen auf das Gleitfenster ist, i der Gleitindex ist und *ERR*(*i - M + r*) der Wert des (*i - M + r*)-ten Elements in der ersten Fehlersequenz ist, r eine positive ganze Zahl veränderbar von 1 bis M ist, wobei M eine dynamische Variable ist und entsprechend der Einstellung der Empfangsvorrichtung variiert wird;

wobei die Blockmittelwertoperation eine sequentielle und nicht überlappende Mittelung jedes R Zeitbereichsinterpolationsergebnisses jedes Symbols nach dem Ausführen der differentiellen Operation und sequentielles Eingeben jedes Mittelwertergebnisses in die erste Fehlersequenz umfasst, wobei R eine positive ganze Zahl ist und entsprechend zum Typ jedes Symbols variiert;

wobei der Schritt des Bestimmens, ob das OFDM-Signal durch die Gleichkanalinterferenz auf der Grundlage der anormalen Ausgabe und des Fehlermittelwerts jedes Symbols beeinflusst wird (S107), ferner umfasst:

sequentielles Ausführen einer ersten Vergleichsoperation der anormalen Ausgabe und des Fehlermittelwert jedes Symbols, um T erste Vergleichsergebnisse zu erhalten, die sich auf jedes Symbol beziehen (S301), wobei T eine positive ganze Zahl größer als 1 ist;

Auswählen des Symbols als ein Startsymbol wenn zumindest eines der ersten Vergleichsergebnisse, die sich auf die Symbole beziehen, als wahr bestimmt wird (S303);

sequentielles Eingeben der ersten Vergleichsergebnisse in Bezug auf die Symbole zu einer T × L Erfassungsmatrix von dem Startsymbol und jeweils Mitteln von L Elementen in jeder Zeile der Erfassungsmatrix, um T erste erfasste Werte zu erhalten (S305), wobei L eine positive ganze Zahl ist;

eins zu eins Vergleichen der T ersten erkannten Werte mit T vorbestimmten Schwellenwerten und Erhalten von T Vergleichsergebnissen und Aufsummieren der T Vergleichsergebnisse, um einen zweiten erfassten Wert zu erzeugen und zu bestimmen, ob der zweite erfasste Wert größer als Null ist (S307); und

Bestimmen, dass das OFDM-Signal durch die Gleichkanalinterferenz beeinflusst wird, wenn der zweite erfasste Wert größer als Null ist (S309).

2. Verfahren nach Anspruch 1, wobei der Mittelwert aller Elemente in der ersten Fehlersequenz $S\_AVG$ ist, wobei

$$S\_AVG = \left(1/K\right)\sum_{i=1}^{K} ERR(i)$$

ist und $K$ eine Menge von Elementen der ersten Fehlersequenz ist, und $ERR(i)$ der Wert des i-ten Elements in der ersten Fehlersequenz ist.

3. Verfahren nach Anspruch 1, wobei die erste Vergleichsoperation umfasst:

Bestimmen einer ersten Schwelle gemäß dem Gleitindex, der der anormalen Ausgabe entspricht (S401); und

Multiplizieren des ersten Schwellenwerts und des Fehlermittelwerts mit T Multiplikationsleistungsverhältnissen, um T zweite Schwellenwerte zu erzeugen, und Vergleichen der anormalen Ausgabe mit jedem der T zweiten Schwellenwerte, um die T ersten Vergleichsergebnisse zu erhalten (S403);

wobei, wenn die anormale Ausgabe größer als der zweite Schwellenwert ist, das erste Vergleichsergebnis als wahr bestimmt wird.

4. Verfahren nach Anspruch 3, wobei, wenn Werte der T zweiten Schwellenwerte steigen, Werte der T vorbestimmten Schwellenwerte abfallen und wenn die Werte der T zweiten Schwellenwerte abfallen, die Werte der T vorbestimmten Schwellenwerte steigen.

5. Schaltkreis (5) zum Detektieren von Gleichkanalinterferenz, der in einer Empfangsvorrichtung eines OFDM-System verwendet wird, wobei die Empfangsvorrichtung ein OFDM-Signal mit einer Vielzahl von Symbolen empfängt und eine Kanalschätzoperation des OFDM-Signal ausführt, **dadurch gekennzeichnet, dass** der Schaltkreis (5) umfasst:

ein Erfassungsmodul (51), das eingerichtet ist jeweils eine Vielzahl von Zeitbereichsinterpolationsergebnissen, die mit jedem Symbol in Beziehung stehen, nach dem Ausführen einer gestreute Pilotzeitbereichsinterpolation während der Kanalschätzoperation zu erfassen;

ein erstes Operationsverarbeitungsmodul (53), das eingerichtet ist jeweils eine differentielle Operation und eine Blockmittelwertoperation der Zeitbereichsinterpolationsergebnisse jedes Symbols auszuführen, um eine erste Fehlersequenz in Bezug auf jedes Symbol zu erzeugen und entsprechend einen Mittwert von allen zu erhalten Elementen in der ersten Fehlersequenz als ein Fehlermittelwert jedes Symbols zu erhalten;

ein zweites Operationsverarbeitungsmodul (55), das eingerichtet ist eine gleitende Mittelwertoperation der ersten Fehlersequenz jedes Symbols basierend auf einem Gleitindex eines Gleitfensters sequentiell auszuführen, um einen auf jedes Symbol bezogenen ersten Vektor zu erhalten und entsprechend ein Maximum unter allen Elementen in dem ersten Vektor als eine anormale Ausgabe, die mit jedem Symbol in Beziehung steht, zu erhalten; und

ein Bestimmungsmodul (57), das eingerichtet ist zu bestimmen, ob das OFDM-Signal durch die Gleichkanalinterferenz auf der Basis der anormalen Ausgabe und des Fehlermittelwerts jedes Symbols beeinflusst wird;

wobei das i-te Element des ersten Vektors *MAVG(i)* ist, wobei $MAVG(i) = (1/M) \sum_{r=1}^{M} ERR(i - M + r)$ ist, *M* eine auf das Gleitfenster bezogene Fensterlänge ist, i der Gleitindex ist und *ERR(i - M + r)* der Wert des(*i - M + r*)-ten Elements in der ersten Fehlersequenz ist, r eine positive ganze Zahl veränderbar von 1 bis M ist, wobei M eine dynamische Variable ist und entsprechend der Einstellung der Empfangsvorrichtung variiert;

wobei das erste Operationsverarbeitungsmodul (53) ferner eingerichtet ist jedes R-Zeitbereichsinterpolationsergebnisse jedes Symbols nach dem Ausführen der differentiellen Operation sequentiell und nicht überlappend zu Mitteln und

eingerichtet ist, jedes Mittelwertergebnis sequentiell in die erste Fehlersequenz einzugeben, wobei R eine positive ganze Zahl ist und entsprechend dem Typ jedes Symbols variiert; und

wobei, um zu bestimmen, ob das OFDM-Signal durch die Gleichkanalinterferenz beeinflusst wird, das Bestimmungsmodul (57) ferner eingerichtet ist zum:

sequentiellen Ausführen einer ersten Vergleichsoperation an der anormalen Ausgabe und dem Fehlermittelwert jedes Symbols, um T erste Vergleichsergebnisse zu erhalten, die sich auf jedes Symbol beziehen, wobei T eine positive ganze Zahl größer als 1 ist;

Auswählen des Symbols als ein Startsymbol wenn zumindest eines der ersten Vergleichsergebnisse, die sich auf die Symbole beziehen, als wahr bestimmt wird;

sequentielles Eingeben der ersten Vergleichsergebnisse in Bezug auf die Symbole zu einer T × L Detektionsmatrix von dem Startsymbol und jeweils mittlere L Elemente in jeder Zeile der Detektionsmatrix, um T erste detektierte Werte zu erhalten, wobei L eine positive ganze Zahl ist;

eins zu eins Vergleichen der T zuerst erfassten Werte mit T vorbestimmten Schwellenwerten und Erhalten von T Vergleichsergebnissen und Aufsummieren der T Vergleichsergebnisse, um einen zweiten erfassten Wert zu erzeugen und zu bestimmen, ob der zweite erfasste Wert größer als Null ist; und

Bestimmen, dass das OFDM-Signal durch die Gleichkanalinterferenz beeinflusst wird, wenn der zweite detektierte Wert größer als Null ist.

6. Schaltkreis nach Anspruch 5, wobei der Mittelwert aller Elemente in der ersten Fehlersequenz *S_AVG* ist, wobei

$$S\_AVG = (1/K) \sum_{i=1}^{K} ERR(i)$$

ist und Keine Menge von Elementen der ersten Fehlersequenz ist, und *ERR(i)* der Wert des i-ten Elements in der ersten Fehlersequenz ist.

7. Schaltkreis nach Anspruch 5, wobei zum Ausführen der ersten Vergleichsoperation das Bestimmungsmodul (57) ferner eingerichtet ist zum:

Bestimmen einer ersten Schwelle gemäß dem Gleitindex, der der anomalen Ausgabe entspricht; und

Multiplizieren des ersten Schwellenwerts und des Fehlerdurchschnitts mit T Multiplikationsleistungsverhältnissen, um T zweite Schwellenwerte zu erzeugen, und Vergleichen der anormalen Ausgabe mit jedem der T zweiten Schwellenwerte, um die T ersten Vergleichsergebnisse zu erhalten;

wobei, wenn die anormale Ausgabe größer als der zweite Schwellenwert ist, das erste Vergleichsergebnis als wahr bestimmt wird.

8. Schaltkreis nach Anspruch 7, wobei wenn Werte der T zweiten Schwellenwerte aufsteigend sind, Werte der T vorbestimmten Schwellenwerte abfallen, und wenn die Werte der T zweiten Schwellenwerte abfallen, die Werte der T vorbestimmten Schwellenwerte aufsteigend sind.

## Revendications

1. Procédé de détection d'un brouillage « dans le même canal », dans un dispositif de réception, au sein d'un système de multiplexage OFDM, le dispositif de réception recevant un signal de multiplexage OFDM présentant une pluralité de symboles et mettant en oeuvre une opération d'estimation de canal sur le signal de multiplexage OFDM, **caractérisé en ce que** le procédé comprend les étapes ci-dessous consistant à :

capturer respectivement une pluralité de résultats d'interpolation dans le domaine temporel connexes à chacun des symboles, suite à l'exécution d'une interpolation dans le domaine temporel de pilotes dispersés au cours de l'opération d'estimation de canal (S101) ;

exécuter respectivement une opération différentielle et une opération de moyenne sur les blocs sur les résultats d'interpolation dans le domaine temporel de chaque symbole, en vue de générer une première séquence d'erreurs connexe à chaque symbole, et en vue d'obtenir de manière correspondante une moyenne de tous les éléments dans la première séquence d'erreurs en tant qu'une moyenne d'erreurs de chaque symbole (S103) ;

exécuter séquentiellement une opération de moyenne mobile sur la première séquence d'erreurs de chaque symbole, sur la base d'un indice mobile d'une fenêtre dynamique, en vue d'obtenir un premier vecteur connexe à chaque symbole, et en vue d'obtenir, de manière correspondante, un maximum parmi tous les éléments dans le premier vecteur, en tant qu'une sortie anormale connexe à chaque symbole (S105) ; et

déterminer si le signal de multiplexage OFDM est affecté par le brouillage « dans le même canal », sur la base de la sortie anormale et de la moyenne d'erreurs de chaque symbole (S107) ;

dans lequel le $i^{\text{ème}}$ élément du premier vecteur est MAVG($i$), dans lequel

$$MAVG(i) = (1/M)\sum_{r=1}^{M} = ERR(i - M + r)$$

« $M$ » est une longueur de fenêtre connexe à la fenêtre dynamique, « $i$ » est l'indice mobile et « $ERR(i - M + r)$ » est la valeur du $(i - M + r)^{\text{ième}}$ élément dans la première séquence d'erreurs, « r » est une variable entière positive modifiable de 1 à M, dans lequel « $M$ » est une variable dynamique et modifiée selon la définition du dispositif de réception ;

dans lequel l'opération de moyenne sur les blocs inclut un calcul de moyenne, séquentiellement, et sans chevauchement, de tous les « R » résultats d'interpolation dans le domaine temporel de chaque symbole, suite à l'exécution de l'opération différentielle, ainsi qu'une application en entrée, séquentiellement, de chaque résultat moyen dans la première séquence d'erreurs, dans lequel « R » est une variable entière positive et modifiée selon le type de chaque symbole ;

dans lequel, l'étape consistant à déterminer si le signal de multiplexage OFDM est affecté par le brouillage « dans le même canal », sur la base de la sortie anormale et de la moyenne d'erreurs de chaque symbole (S107), inclut en outre les étapes ci-dessous consistant à :

exécuter séquentiellement une première opération de comparaison sur la sortie anormale et la moyenne d'erreurs de chaque symbole, en vue d'obtenir « T » premiers résultats de comparaison connexes à chaque symbole (S301), dans lequel « T » est un nombre entier positif supérieur à « 1 » ;

lorsqu'il est déterminé qu'au moins l'un des premiers résultats de comparaison connexes aux symboles est vrai, sélectionner le symbole en tant qu'un symbole de départ (S303) ;

appliquer en entrée, séquentiellement, les premiers résultats de comparaison connexes aux symboles, à une matrice de détection « TxL », à partir du symbole de départ, et calculer respectivement la moyenne de « L » éléments dans chaque ligne de la matrice de détection, en vue d'obtenir « T » premières valeurs détectées (S305), dans lequel « L » est un nombre entier positif ;

comparer les « T » premières valeurs détectées à « T » seuils prédéterminés, une par une, et obtenir « T » résultats de comparaison, et additionner les « T » résultats de comparaison en vue de générer une seconde valeur détectée et déterminer si la seconde valeur détectée est supérieure à zéro (S307) ; et

déterminer que le signal de multiplexage OFDM est affecté par le brouillage « dans le même canal », si la seconde valeur détectée est supérieure à zéro (S309).

2. Procédé selon la revendication 1, dans lequel la moyenne de tous les éléments de la première séquence d'erreurs est « $S\_AVG$ », dans lequel $S\_AVG = (1/K)\sum_{i=1}^{K} ERR(i)$ et « $K$ » est une quantité d'éléments de la première séquence d'erreurs, et « $ERR(i)$ » est la valeur du $i^{\text{ème}}$ élément dans la première séquence d'erreurs.

3. Procédé selon la revendication 1, dans lequel la première opération de comparaison comprend les étapes ci-dessous consistant à :

déterminer un premier seuil selon l'indice mobile correspondant à la sortie anormale (S401) ; et

multiplier le premier seuil et la moyenne d'erreurs par « T » rapports de puissance de multiplication, en vue de générer « T » seconds seuils, et comparer la sortie anormale à chacun des « T » seconds seuils, en vue d'obtenir les « T » premiers résultats de comparaison (S403) ;

dans lequel, lorsque la sortie anormale est supérieure au second seuil, le premier résultat de comparaison est déterminé comme vrai.

4. Procédé selon la revendication 3, dans lequel, lorsque les valeurs des « T » seconds seuils sont ascendantes, les valeurs des « T » seuils prédéterminés sont descendantes, et lorsque les valeurs des « T » seconds seuils sont descendantes, les valeurs des « T » seuils prédéterminés sont ascendantes.

5. Circuit (5) destiné à détecter un brouillage « dans le même canal », utilisé dans un dispositif de réception, au sein d'un système de multiplexage OFDM, dans lequel le dispositif de réception reçoit un signal de multiplexage OFDM présentant une pluralité de symboles et met en oeuvre une opération d'estimation de canal sur le signal de multiplexage OFDM, **caractérisé en ce que** le circuit (5) comporte :

un module de capture (51), configuré de manière à capturer respectivement une pluralité de résultats d'interpolation dans le domaine temporel connexes à chaque symbole, suite à l'exécution d'une interpolation dans le domaine temporel de pilotes dispersés au cours de l'opération d'estimation de canal ;

un premier module de traitement d'opération (53), configuré de manière à exécuter respectivement une opération différentielle et une opération de moyenne sur les blocs sur les résultats d'interpolation dans le domaine temporel de chaque symbole, en vue de générer une première séquence d'erreurs connexe à chaque symbole, et en vue d'obtenir de manière correspondante une moyenne de tous les éléments dans la première séquence d'erreurs en tant qu'une moyenne d'erreurs de chaque symbole ;

un second module de traitement d'opération (55), configuré de manière à exécuter séquentiellement une opération de moyenne mobile sur la première séquence d'erreurs de chaque symbole, sur la base d'un indice mobile d'une fenêtre dynamique, en vue d'obtenir un premier vecteur connexe à chaque symbole, et en vue d'obtenir, de manière correspondante, un maximum parmi tous les éléments dans le premier vecteur, en tant qu'une sortie anormale connexe à chaque symbole ; et

un module de détermination (57) configuré de manière à déterminer si le signal de multiplexage OFDM est affecté par le brouillage « dans le même canal », sur la base de la sortie anormale et de la moyenne d'erreurs de chaque symbole ;

dans lequel le $i^{\text{ème}}$ élément du premier vecteur est $MAVG(i)$, dans lequel

$$MAVG(i) = (1/M) \sum_{r=1}^{M} = ERR(i - M + r),$$

« M » est une longueur de fenêtre connexe à la fenêtre dynamique, « i » est l'indice mobile et « $ERR(i - M + r)$ » est la valeur du $(i - M + r)^{\text{ième}}$ élément dans la première séquence d'erreurs, « r » est une variable entière positive modifiable de 1 à M, dans lequel « M » est une variable dynamique et modifiée selon la définition du dispositif de réception ;

dans lequel le premier module de traitement d'opération (53) est en outre configuré de manière à calculer une moyenne, séquentiellement, et sans chevauchement, de tous les « R » résultats d'interpolation dans le domaine temporel de chaque symbole, suite à l'exécution de l'opération différentielle, et configuré de manière à appliquer en entrée, séquentiellement, chaque résultat moyen à la première séquence d'erreurs, dans lequel « R » est une variable entière positive et modifiée selon le type de chaque symbole ;

dans lequel, en vue de déterminer si le signal de multiplexage OFDM est affecté par le brouillage « dans le même canal », le module de détermination (57) est en outre configuré de manière à :

exécuter séquentiellement une première opération de comparaison sur la sortie anormale et la moyenne d'erreurs de chaque symbole, en vue d'obtenir « T » premiers résultats de comparaison connexes à chaque symbole, dans lequel « T » est un nombre entier positif supérieur à « 1 » ;

lorsqu'il est déterminé qu'au moins l'un des premiers résultats de comparaison connexes aux symboles est vrai, sélectionner le symbole en tant qu'un symbole de départ ;

appliquer en entrée, séquentiellement, les premiers résultats de comparaison connexes aux symboles, à une matrice de détection « TxL », à partir du symbole de départ, et calculer respectivement la moyenne de « L » éléments dans chaque ligne de la matrice de détection, en vue d'obtenir « T » premières valeurs détectées, dans lequel « L » est un nombre entier positif ;

comparer les « T » premières valeurs détectées à « T » seuils prédéterminés, une par une, et obtenir « T » résultats de comparaison, et additionner les « T » résultats de comparaison en vue de générer une seconde valeur détectée et déterminer si la seconde valeur détectée est supérieure à zéro ; et

déterminer que le signal de multiplexage OFDM est affecté par le brouillage « dans le même canal », si la seconde valeur détectée est supérieure à zéro.

6. Circuit selon la revendication 5, dans lequel la moyenne de tous les éléments de la première séquence d'erreurs est « *S_AVG* », où $S\_AVG = (1/K) \sum_{i=1}^{K} ERR(i)$ et « *K* » est une quantité d'éléments de la première séquence d'erreurs, et « *ERR(i)* » est la valeur du $i^{ème}$ élément dans la première séquence d'erreurs.

7. Circuit selon la revendication 5, dans lequel, en vue d'exécuter la première opération de comparaison, le module de détermination (57) est en outre configuré de manière à :

   déterminer un premier seuil selon l'indice mobile correspondant à la sortie anormale ; et
   multiplier le premier seuil et la moyenne d'erreurs par « T » rapports de puissance de multiplication, en vue de générer « T » seconds seuils, et comparer la sortie anormale à chacun des « T » seconds seuils, en vue d'obtenir les « T » premiers résultats de comparaison ;
   dans lequel, lorsque la sortie anormale est supérieure au second seuil, le premier résultat de comparaison est déterminé comme vrai.

8. Circuit selon la revendication 7, dans lequel, lorsque les valeurs des « T » seconds seuils sont ascendantes, les valeurs des « T » seuils prédéterminés sont descendantes, et lorsque les valeurs des « T » seconds seuils sont descendantes, les valeurs des « T » seuils prédéterminés sont ascendantes.

**EP 3 163 822 B1**

<div style="border:1px solid black; padding:8px;">
respectively capturing a plurality of time-domain interpolation results related to each symbol, after executing a discrete frequency time-domain interpolation during the channel estimating operation
</div>

~S101

↓

<div style="border:1px solid black; padding:8px;">
respectively executing a differential operation and ablock average operation on the time-domain interpolation results of each symbol, to generate a first error sequence related to each symbol and to correspondingly obtain an average of all elements in the first error sequence as an error average of each symbol
</div>

~S103

↓

<div style="border:1px solid black; padding:8px;">
sequentially executing a sliding average operation on the first error sequence of each symbol based on a moving index of a sliding window, to obtain a first vector relate to each symbol and to correspondingly obtain a maximum among all elements in the first vector as an abnormal output related to each symbol
</div>

~S105

↓

<div style="border:1px solid black; padding:8px;">
determining whether the OFDM signal is affected by the co-channel interference based on the abnormal output and the error average of each symbol
</div>

~S107

## FIG.1

16

EP 3 163 822 B1

FIG.2

S105

S107

sequentially executing a first comparing operation on the abnormal output and the error average of each symbol, to obtain T first comparison results related to each symbol — S301

when at least one of the first comparison results related to the symbols is determined to be true, selecting the symbol as a starting symbol — S303

sequentially inputting the first comparison results related to the symbols to a TxL detection matrix from the starting point, and respectively averaging L elements in each line of the detection matrix to obtain T first detected values — S305

comparing the T first detected values with T predetermined thresholds one on one and obtaining T comparison results, and summing up the T comparison results to generate a second detected value and to determine whether the second detected value is greater than zero — S307

yes

determining that the OFDM signal is affected by the co-channel interference if the second detected value is greater than zero — S309

FIG.3

determining a first threshold according to the moving index corresponding to the abnormal output — S401

multiplying the first threshold and the error average with T multiplying power ratios, to generate T second thresholds, and comparing the abnormal output with each of the T second thresholds to obtain the T first comparison results — S403

# FIG.4

FIG.5

FIG.6

**EP 3 163 822 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080084940 A

- US 20080084940 A1